# EUROPEAN PATENT APPLICATION

(11) **EP 4 672 670 A1**
(43) Date of publication of application: **31.12.2025**
(21) Application number: 24184098.2
(22) Date of filing: 24.06.2024
(51) Int. Cl.: H04L 9/40, H04L 67/02

(54) **PROTECTING AGAINST LOW AND SLOW ATTACKS**

(71) Applicant: British Telecommunications public limited company, London E1 8EE (GB)
(72) Inventor: Fadi EL-MOUSSA, London E1 8EE (GB)
(74) Representative: British Telecommunications public limited company Intellectual Property Department

(57) **Abstract**

The disclosure relates to a computer-implemented method of protecting a server, the method comprising: detecting (s220) one or more characteristics of a low and slow attack in a request to the server made over a connection between a client and the server; and
responsive thereto, issuing (s240) a challenge to the client instructing the client to immediately push its entire buffer contents to the server. If the challenge is not complied with, the connection is terminated (s270) and otherwise the response is forwarded to the server (s290).

## Description

### FIELD

The present disclosure relates to protecting computer systems against low and slow attacks.

More specifically, aspects relate to a computer-implemented method of protecting a server, a data processing system configured to perform such a method, a computer program comprising instructions which, when the program is executed by a computer, cause the computer to carry out such a method, a computer-readable data carrier having such a computer program stored thereon, and a data carrier signal carrying such a computer program.

### BACKGROUND

Denial of service (DoS) attacks are cyber-attacks which seek to occupy computer or network resources with dummy tasks in order to prevent them being available to perform their intended function. Distributed denial of service (DDoS) attacks make use of multiple attacker devices to target the same resource with simultaneous DoS attacks.

Low and slow attacks are a category of DoS attack (sometimes implemented as DDoS attacks) which rely on deliberately small, deliberately slow traffic streams to keep connections with a target device open for as long as possible, requiring minimal resource usage on the attacker device(s). For example, a thread-based web server can be targeted, with the attacker aiming to tie up every thread with slow requests, preventing legitimate users accessing it. Low and slow attacks require very little bandwidth and generate traffic that is difficult to distinguish from genuine traffic.

Slow start hypertext transfer protocol (HTTP) attacks are low and slow attacks on web servers which can be implemented in a number of ways. For example, an HTTP POST request may be issued to a target server with a large value in the content length header field, which tells the server how much data to expect before it can consider the request complete. (The content length header field can for example be set to a value of order 1,000,000 bytes, as opposed to say 1000 bytes for a typical genuine request.) Data is then sent character by character over a very long period of time, just fast enough to avoid the connection timing out for inactivity. The server keeps a large buffer open, waiting for it to fill before starting to process the received data. In another kind of slow start HTTP attack, an excessively long request header is sent to the target server, with the data stream never including the double carriage return that marks the end of the header and triggers the server to start processing the received data.

DoS attacks targeted at the network and transport layers can often be detected by firewalls or intrusion detection systems. Low and slow attacks however often target the application layer in a way that does not trigger the detection mechanisms generally available to defend against DoS attacks. Existing approaches to thwarting low and slow attacks are unsatisfactory. One approach is to simply provide more of the targeted resources, to reduce proportionate impact of the attacks. This relies on additional resources being available. Another approach is to impose stricter timeout conditions. This impacts legitimate clients with slow connections. A third approach is to impose stricter size limits. This restricts the functionality available, for example preventing the server from delivering high content web pages.

What is needed is an improved approach to defending against low and slow attacks.

### SUMMARY

1. According to a first aspect, there is provided a computer-implemented method of protecting a server, the method comprising:
   detecting one or more characteristics of a low and slow attack in a request to the server made over a connection between a client and the server; and
   responsive thereto, issuing a challenge to the client instructing the client to immediately push its entire buffer contents to the server.
2. In some examples, the computer-implemented method further comprises:
   determining that the challenge has not been complied with within a predetermined threshold challenge response period; and
   responsive thereto, terminating the connection.
3. In some examples, the request is a hypertext transfer protocol, 'HTTP', request, and the challenge comprises a transmission control protocol, 'TCP' PSH flag set to 1.
4. In some examples according to clause 3 as dependent directly on clause 1, the computer-implemented method further comprises:
   receiving a response to the challenge; and
   forwarding that response to a server process associated with receipt of the request with the TCP PSH flag reset to 0.
5. In some examples, detecting the one or more characteristics of a low and slow attack in the request comprises:
   i. determining that a receive buffer size requested by the client exceeds a predetermined threshold receive buffer size; and/or
   ii.
      a. detecting a start of a header of the request; and
      b. determining that the header has yet to be completely received a predetermined threshold header receipt period thereafter.
6. In some examples, detecting the one or more characteristics of a low and slow attack in the request comprises:
   monitoring traffic on the connection; and
   determining that a speed of that traffic is below a predetermined threshold speed.
7. In some examples according to clause 6 as dependent on clause 5, the monitoring is performed in response to step i. and/or step ii. b..
8. In some examples according to clause 2, either of clauses 3 or 4 as dependent on clause 2, or any of clauses 5 to 7, the computer-implemented method further comprises determining one or more of the predetermined thresholds referred to therein in dependence on one or more activity measures obtained for the server and/or a network over which the connection extends.
9. In some examples according to clause 2, or any of clauses 3 or 5 to 8 as dependent on clause 2, wherein terminating the connection comprises sending a reset request to the server, that reset request being configured to appear as though it originated from the client.
10. In some examples according to clause 2, or any of clauses 3 or 5 to 8 as dependent on clause 2,
   the computer-implemented method further comprises, prior to issuing the challenge, storing an identifier of a server process associated with receipt of the request;
   wherein terminating the connection comprises:
      retrieving that identifier, and
      terminating the corresponding process.
11. In some examples, the computer-implemented method is performed by an intrusion detection system.
12. According to a second aspect, there is provided a data processing system configured to perform the method of any example in accordance with the first aspect.
13. According to a third aspect, there is provided a computer program comprising instructions which, when the program is executed by a computer, cause the computer to carry out the method of any example in accordance with the first aspect.
14. According to a fourth aspect, there is provided a computer-readable data carrier having stored thereon the computer program of any example in accordance with the third aspect.
15. According to a fifth aspect, there is provided a data carrier signal carrying the computer program of any example in accordance with the third aspect.

### BRIEF DESCRIPTION OF THE FIGURES

Aspects of the present disclosure will now be described by way of example with reference to the accompanying figures. In the figures:
Figure 1 schematically illustrates an example system;
Figure 2 is a flowchart of an example computer-implemented method;
Figure 3 is a flowchart illustrating an example of how a step of Figure 2 can be performed; and
Figure 4 schematically illustrates an example data processing system.

### DETAILED DESCRIPTION

Described herein are computer-implemented methods in which low and slow attack characteristics are monitored for. When an attack is suspected, a challenge is issued to the suspicious client by sending it a message which would trigger an innocent client to immediately push out all the data in its buffer. In this way, a legitimate slow connection can be distinguished from a low and slow attack. If the push command is not complied with then the connection can be closed and the associated buffer released, ending the attack.

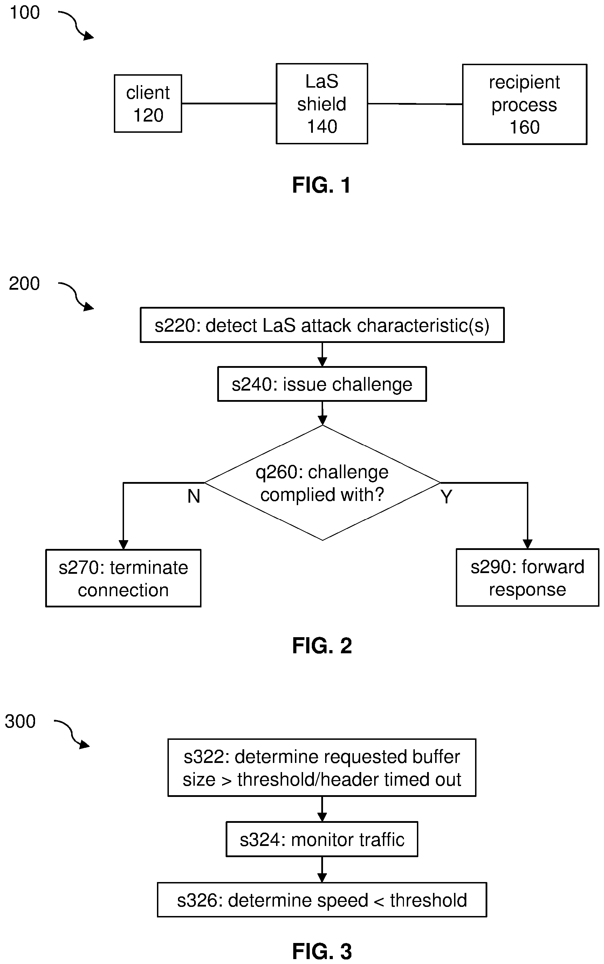

Figure 1 schematically illustrates a system 100 in which the methods described herein can be performed. A client 120 is communicably coupled to a recipient process 160 on a server via a low and slow (LaS) shield 140. Each of the connections between the client 120, LaS shield 140 and recipient process 160 can comprise one or more wired or wireless communication links. The LaS shield can for example be comprised in an intrusion detection system. Such an intrusion detection system can be network-based (on a separate device to the server, e.g. connected to it over the internet), or host-based (on the server itself, e.g. connected to the recipient process 160 via a communication bus). Network-based intrusion detection has visibility of threats to multiple devices, but may not have access to traffic contents due to data being encrypted when in transit. Conversely, host-based intrusion detection has access to traffic contents but, absent communication with other host-based intrusion detection systems, lacks visibility of any threats other than those perpetrated against its host.

Figure 2 is a flowchart of a computer-implemented method 200, performed by the LaS shield 140 of Figure 1. At step s220, one or more characteristics of a low and slow attack are detected in a request to the server made over a connection between the client 120 and the server. In response to this detection, a challenge is issued to the client 120 at step s240, instructing the client to immediately push its entire buffer contents to the server.

At query q260, it is determined whether the challenge has been complied with within a predetermined threshold challenge response period. If not, the connection is terminated at step s270. If so, the challenge response is forwarded to the recipient process 160 at step s290.

If the request is an HTTP request (e.g., a POST request) then the challenge transmitted at step s240 can make use of a feature of the transmission control protocol (TCP) known as the PSH flag. The PSH flag is a single bit in the TCP packet header. When it is set to 1 it acts as an instruction to push any buffered data to the receiving application. (While data can be buffered as normal when the PSH flag is set to 0.) Therefore the challenge message can comprise a PSH flag set to 1. If and when the LaS shield 140 receives a response to the challenge, it can reset the TCP PSH flag to 0 before forwarding the challenge response on to the recipient process 160. This allows the receiving application to buffer the data as normal.

Figure 3 is a flowchart illustrating an example of how step s220 of Figure 2 can be performed to detect one or more characteristics of a low and slow attack. At step s322, it is determined that a receive buffer size requested by the client exceeds a predetermined threshold receive buffer size (e.g. 1500 bytes), and/or that the request header has yet to be completely received a predetermined threshold header receipt period (e.g., 10 seconds) after it starts being received. This triggers monitoring of traffic on the connection at step s324. It is then determined at step s326 that the traffic speed is below a predetermined threshold speed. According to the example of Figure 3, at least one of an above-threshold buffer size request and a header timeout are required to be detected, in addition to subsequent detection of a below threshold traffic speed, to trigger the challenge. In other examples, the challenge could be issued in response to any, or only a specific one, of those conditions being detected. As an alternative, or in addition to, use of a threshold speed, a predetermined threshold communication receipt period could be used, within which the client is expected to signal end of the communication (e.g. via setting the TCP PSH flag to 1).

Any of the thresholds referred to above can be determined in dependence on one or more activity measures obtained for the server and/or a network over which the connection extends. In this way, the implementation can be tailored to the circumstances, and optionally updated as those circumstances change over time. For example, a threshold header receipt period could be set at 5 seconds in the absence of any significant congestion, or 1 minute when severe congestion is detected. It could be reduced if the server is determined to be busy.

If the LaS shield 140 is remote from the recipient process 160 then terminating the connection at step s270 of Figure 2 can suitably comprise sending a reset request to the server, configured to appear as though it originated from the client 120 (for example by spoofing the client's internet protocol, 'IP', address and port number). The reset request can for example be a TCP packet with the RST flag set to 1. This indicates to the receiving device that it should immediately stop using the TCP connection, discarding any further packets it receives with headers indicating they belong to that connection. This causes the recipient process 160's receive buffer to be released.

If the LaS shield 140 is resident on the same device as the recipient process 160, then an identifier of the recipient process 160 can be stored prior to issuing the challenge at step s240, so that terminating the connection at step s270 can comprise retrieving that identifier, and terminating the corresponding process. This causes the recipient process's receive buffer to be released.

### Suitable data processing system

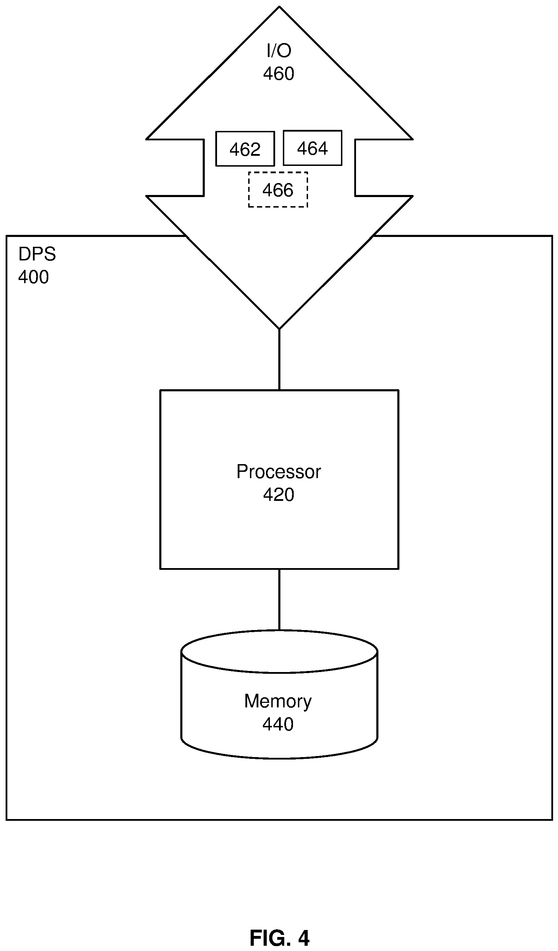

Figure 4 schematically illustrates an example data processing system (DPS) 400 capable of performing any of the methods described above. It comprises a processor 420 operably coupled to both a memory 440 and an interface (I/O) 460 comprising a receiver 462 and a transmitter 464. The receiver 462 is configured to receive messages. It can comprise one or more wireless receiver modules and/or one or more wired receiver modules. The transmitter 464 can comprise one or more wireless transmitter modules and/or one or more wired transmitter modules.

The memory 440 can optionally comprise computer program instructions which, when the program is executed by the processor 420, cause the data processing system 400 to carry out any of the methods described above. Alternatively or additionally, the interface 460 can comprise a physical interface 466 configured to receive a data carrier having such instructions stored thereon. Alternatively or additionally, the receiver 462 can be configured to receive a data carrier signal carrying such instructions.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The word "comprising" is intended to mean "including at least".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

## Claims

1. A computer-implemented method of protecting a server, the method comprising:
detecting one or more characteristics of a low and slow attack in a request to the server made over a connection between a client and the server; and
responsive thereto, issuing a challenge to the client instructing the client to immediately push its entire buffer contents to the server.

2. The computer-implemented method of claim 1, further comprising:
determining that the challenge has not been complied with within a predetermined threshold challenge response period; and
responsive thereto, terminating the connection.

3. The computer-implemented method of either of claims 1 or 2, wherein the request is a hypertext transfer protocol, 'HTTP', request, and the challenge comprises a transmission control protocol, `TCP' PSH flag set to 1.

4. The computer-implemented method of claim 3 as dependent directly on claim 1, further comprising:
receiving a response to the challenge; and
forwarding that response to a server process associated with receipt of the request with the TCP PSH flag reset to 0.

5. The computer-implemented method of any of claims 1 to 4, wherein detecting the one or more characteristics of a low and slow attack in the request comprises:
i. determining that a receive buffer size requested by the client exceeds a predetermined threshold receive buffer size; and/or
ii.
a. detecting a start of a header of the request; and
b. determining that the header has yet to be completely received a predetermined threshold header receipt period thereafter.

6. The computer-implemented method of any preceding claim, wherein detecting the one or more characteristics of a low and slow attack in the request comprises:
monitoring traffic on the connection; and
determining that a speed of that traffic is below a predetermined threshold speed.

7. The computer-implemented method of claim 6 as dependent on claim 5, wherein the monitoring is performed in response to step i. and/or step ii. b..

8. The computer-implemented method of claim 2, either of claims 3 or 4 as dependent on claim 2, or any of claims 5 to 7, further comprising determining one or more of the predetermined thresholds referred to therein in dependence on one or more activity measures obtained for the server and/or a network over which the connection extends.

9. The computer-implemented method of claim 2, or any of claims 3 or 5 to 8 as dependent on claim 2, wherein terminating the connection comprises sending a reset request to the server, that reset request being configured to appear as though it originated from the client.

10. The computer-implemented method of claim 2, or any of claims 3 or 5 to 8 as dependent on claim 2,
the computer-implemented method further comprising, prior to issuing the challenge, storing an identifier of a server process associated with receipt of the request;
wherein terminating the connection comprises:
retrieving that identifier, and
terminating the corresponding process.

11. The computer-implemented method of any preceding claim, performed by an intrusion detection system.

12. A data processing system configured to perform the method of any preceding claim.

13. A computer program comprising instructions which, when the program is executed by a computer, cause the computer to carry out the method of any of claims 1 to 11.

14. A computer-readable data carrier having stored thereon the computer program of claim 13.

15. A data carrier signal carrying the computer program of claim 13.
